(19) Europäisches Patentamt
European Patent Office
Office européen des brevets

(11) Publication number: **0 030 119**
**B1**

(12) **EUROPEAN PATENT SPECIFICATION**

(45) Date of publication of patent specification: **06.02.85**

(51) Int. Cl.$^4$: **F 16 L 13/00**

(21) Application number: **80304240.7**

(22) Date of filing: **26.11.80**

(54) **Device and method for coupling pipes.**

(30) Priority: **28.11.79 US 98088**
**28.11.79 US 97779**

(43) Date of publication of application:
**10.06.81 Bulletin 81/23**

(45) Publication of the grant of the patent:
**06.02.85 Bulletin 85/06**

(84) Designated Contracting States:
**AT BE CH DE FR IT LI NL SE**

(56) References cited:
**EP-A-0 004 696**
**DE-A-2 448 160**
**DE-A-2 615 685**
**DE-A-2 615 723**
**DE-A-2 852 495**
**GB-A-1 518 788**
**US-A-1 736 610**
**US-A-4 135 743**

(73) Proprietor: **RAYCHEM CORPORATION**
**300 Constitution Drive**
**Menlo Park California 94025 (US)**

(72) Inventor: **Szalvay, Laszlo**
**42 Wessex Way**
**San Carlos California 94070 (US)**
Inventor: **Broyles, Harry Clifton**
**260 N. Pastoria Avenue**
**Sunnyvale California 94086 (US)**

(74) Representative: **Jones, David Colin et al**
**Raychem Limited Intellectual Property Law**
**Department Swan House 37-39 High Holborn**
**London WC1 (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 030 119 B1

## Description

This invention relates to a composite pipe coupling using heat recoverable metallic material.

In the past, heat-recoverable metal couplings have been developed for joining pipes together for such applications as aircraft hydraulic systems. See for example U.S. Patent No. 4,135,743. As discussed in said patent, couplings have been made entirely out of heat recoverable metal and are referred to generally as monolithic couplings. Composite couplings have also been made, using a liner which is driven by heat-recoverable metal to effect sealing. When such a composite pipe coupling having a liner is utilized, the tensile strength characteristics of the coupling itself depend primarily upon the thickness or cross-sectional area of the liner as well as other factors. It can be understood, therefore, that an increase in tensile load strength requires an increase in thickness of the liner and correspondingly a greater driving force to crush the liner to seal with respect to the pipes being coupled. It must be understood that even if the heat-recoverable metal driver is unitary it will carry only a nominal amount of tensile load since it is only in frictional contact with the liner. The major portion of said tensile load is carried by the liner. If the driver is not unitary, e.g. if it is a plurality of ring segments, it would obviously be incapable of carrying any tensile load. Such prior art devices are therefore limited in tensile strength and utility.

DE—A1—2615685 discloses a composite pipe coupling comprising heat-recoverable driver means and a lining sleeve, which is tapered over at least part of its length.

In accordance with the present invention, there is provided a composite pipe-coupling comprising: liner means capable of receiving therein the ends of pipes to be connected; driver means of heat-recoverable metallic material mounted around said liner means, said driver means being arranged to constrict inwardly upon heat recovery to grip said liner means and to deform said liner means to effect sealing with the pipes to be connected; and support means that is mounted around said driver means and said liner means to provide axial support for the liner means, by carrying tensile loading that is created in use by the connected pipes.

In one embodiment, the support means is mounted concentrically around said driver means and acts longitudinally inwardly of the coupling on, and preferably directly contacts, each end of said liner means.

The tensile strength of the composite coupling is not limited by the tensile strength of the liner means, since high independent coupling strength is provided by the support means.

In a further embodiment, the coupling comprises two tensile rings of heat-recoverable metallic material, said tensile rings being axially mounted adjacent respective ends of said liner means and being arranged to constrict inwardly upon heat recovery to grip respective ones of said pipes. In this embodiment, the tensile strength of the composite coupling is not limited by the tensile strength of the liner means, since the tensile rings and complementary support means can be arranged to provide high overall coupling strength independent of liner strength. Furthermore, the galvanic corrosion potential and external contamination may be reduced.

The driver means may comprise a plurality of ring-like segments distributed axially along and over the liner means, and may have a varying degree of heat recovery therealong so as to exert an axially variable gripping force on the liner means.

The support means may comprise heating means for effecting recovery of the driver means.

The composite pipe coupling of the present invention is suitable for a wide variety of diameter pipe, and especially for large diameter pipe utilized in undersea gas and oil transport. The coupling is capable of withstanding high hydraulic or pneumatic pressure internally and high stresses created by movement of undersea piping by the sea itself during operation. Furthermore, the pipe coupling provides a high tensile loading coupling suitable for subsea installation requiring no subsea welding and not employing flanges, which are leak prone.

Several embodiments of composite pipe coupling and methods of coupling two pipes together, all in accordance with the present invention, will now be described by way of example, with reference to the accompanying drawings, in which:—

Figures 1 and 2 show first and second embodiments of the coupling respectively;

Figure 3 shows a modification of Figure 1;

Figures 4 and 5 show third and fourth embodiments of the coupling respectively; and

Figure 6 shows a modification of Figure 4.

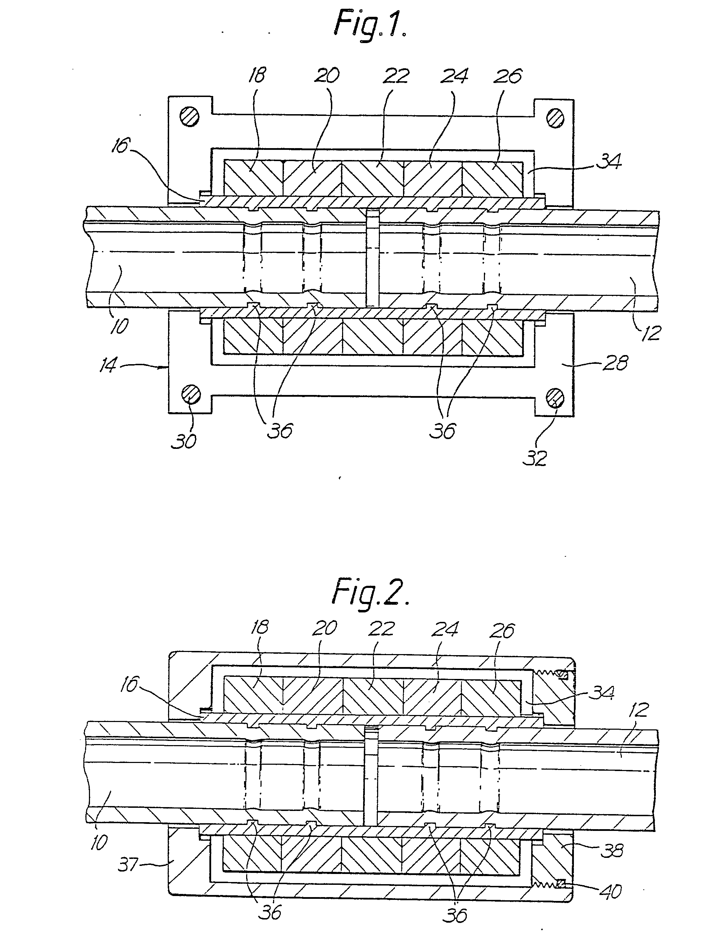

With reference to the drawings, Figure 1 illustrates a cross-section of a composite pipe coupling connecting pipes 10 and 12. In operation, the pipes 10 and 12 are positioned within the composite pipe coupling shown generally at 14 through an over-sized hollow, tubular liner 16. Liner 16 is thin in cross-section and is preferably made from a material that is resistant to corrosive fluids or gases that are being pumped through pipes 10 and 12, and to external pipe corrosive atmosphere. Drivers 18, 20, 22, 24 and 26 are positioned concentrically around liner 16. The drivers are made from a heat-recoverable metal.

As shown, a plurality of drivers in the form of rings are utilized, but it is understood that a one-piece or unitary driver may be utilized. Preferably the centrally located driver, driver 22, has less recovery than the outer drivers, drivers 18, 20, 24 and 26, because it is not desirable to subject the ends of pipes 10 and 12 to such compressive forces which might tend to deform and bend the pipes and thereby constrict flow within the pipes or weaken the connection. It is understood that the degree of recovery of memory type metals is controllable and depends upon the amount of deformation it is subjected to in its martensitic state. It is also understood that any number of rings may be used. It is important to note that segmenting the driver means has several advantages. One such advantage is the ease of manufacture as for example by ring rolling of individual segments such as drivers 18, 20, 22, 24 and 26, which would not be possible if the driver means were unitary. Ring rolling the individual segments improves the mechanical properties and performance of each segment. Ring rolling will develop an orientation or texture in a preferred manner with respect to the direction of maximum strain. Since this direction is the same (tangential) as the hoop stresses developed in the rings during their expansion and recovery the ring rolling process will improve the mechanical properties of the rings. It is also more economical to control the driver thickness along its length by segmenting rather than by machining a one piece driver. One of the most important advantages of the segmented design is that the final coupling is inherently more reliable. Specifically, if any one segment should fail the coupling will generally remain operable.

The drivers 18, 20, 22, 24 and 26 are made from heat-recoverable metals which are commonly called memory alloys. These ring-like members have been deformed from an original configuration and retain their deformed configuration until they are heated, at which time they will recover toward their original configuration. These alloys exhibit a so-called martensitic transformation from a low temperature form to high temperature form and it is this transformation which produces the memory effect. Among such alloys there may be mentioned for example, various alloys of titanium and nickel which are described in U.S. Patent Nos. 3,174,851, 3,351,463, 3,753,700, 3,759,552, British Patent Nos. 1,327,441, and 1,327,442 and NASA Publication SP 110, "55-Nitinol — The Alloy with a Memory, etc." (U.S. Government Printing Office, Washington, D.C. 1972). The property of heat-recoverability is not confined to such titanium nickel alloys. Thus for example, various beta-brass alloys have been demonstrated to exhibit this property in for example, N. Nakanishi et al., Scipta Metallurgica 5, 433—440 (Pergamon Press, 1971) and such materials may be alloyed to lower their transition temperatures to cryogenic regimes by known techniques. Similarly, type 304 stainless steels have been shown to enjoy such characteristics (see E. Enami et al., ibid at pages 663—668).

As shown in Figure 1, the drivers have been heated and have constricted radially inwardly and gripped the liner to cause the liner to seal on to the pipes. The tensile load capability of the liner is greatly increased by use of external support arrangement 28, which comprises two half-shells (only one is shown) that are coupled together by flange members 30 and bolts 32. The support arrangement 28 contacts the ends of the liner 16 at the periphery of the opening therethrough. The liner 16 is contained radially by the drivers 18, 20, 22, 24 and 26 and axially by the support arrangement 28. Tensile loads on the liner 16 created by pipes 10 and 12 are transmitted by the radially contained liner 16 axially through its ends to the external support arrangement 28, said liner 16 therefore acting as a compression member. Of the total tensile load of the coupling, a much greater portion is carried by the external support arrangement 28 than by the liner 16. The ratio of the tensile load carried between the support arrangement 28 and the liner 16 depends upon the modulus of elasticity, yield strength and cross section area of the respective components. It is understood that the support arrangement 28 may comprise any number of segments. There is preferably a slight force fit between the support arrangement 28 and the liner 16 to ensure that the liner 16 will not elongate under tensile load without the support arrangement also elongating. Note also that there is a small amount of axial space 34 between the outer ends of the driver 16 and the inside of the external support arrangement 28 to accommodate some axial swelling of the driver when it returns to original shape and moves into engaging contact with pipes 10 and 12. The amount of spacing between the support arrangement 28 and the driver 16 may be varied generally to place some load on the external support arrangement, if desired.

It can be seen in Figure 1 that the inside surface of the liner 16 has continuous ring-like teeth 36 which cut into the pipes 10 and 12. In the embodiment shown in Figure 1 the liner 16 has teeth of generally square cross-section positioned on the inside thereof at points generally axially centered under the drivers 18, 20, 24 and 26. The configuration, size and number of such teeth or serrations may be varied.

It can also be seen that the liner 16 and the drivers 18, 20, 22, 24 and 26 are a close fit. The relative dimensions of these components must be such that the driver can slide over the liner 16 during assembly but yet not be so loose in tolerance as to defeat the desired constricting and gripping forces generated by the driver when it returns to its original shape.

In the embodiment of Figure 2 the external support arrangement comprises a canister 37 and a complementary lid 38. The canister 37 has a generally cylindrical side wall and an end wall having an opening therethrough to accommodate one of the pipes to be coupled. Likewise the lid 38 has an opening therethrough to accommodate the other pipe to be coupled. The lid 38 is attached to the canister by conventional means, as for example by threading. Other fastening means such as flanges and bolts, welding, adhesives, etc., may be employed. Furthermore, the configuration of the canister may be varied from cylindrical to cubical, spherical, etc., as may be desired. It is important to note that lid 38 and canister 37 interface may be sealed by an "O" ring 40 as shown, to keep out external contamination such as sea water.

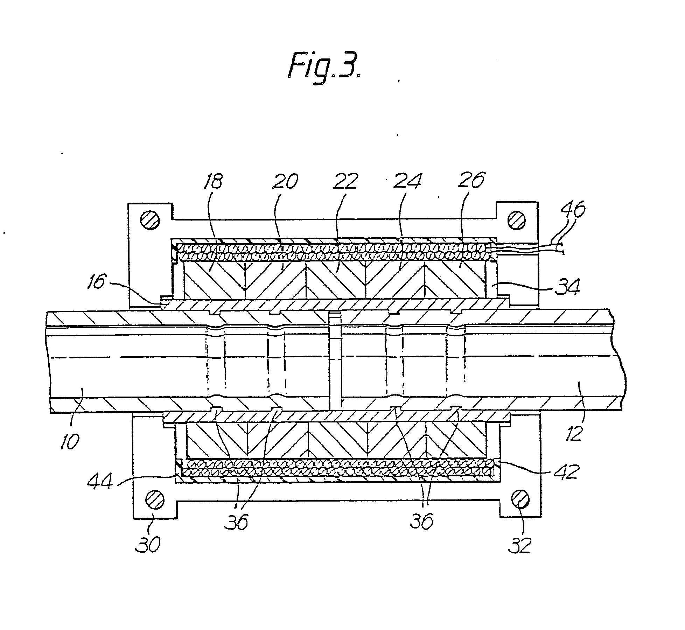

Figure 3 illustrates an alternative embodiment wherein the coupling shown in Figure 1 is supplemented by a controllable heating device. A heater may be desired when a memory metal element with austenitic start temperature above ambient is utilised. An electrical heating element 42 is placed in the cavity between the external support arrangement and the driver. Thermal insulation 44 is placed between the heating element 42 and the support arrangement to increase the efficiency of the heating element. Power leads 46 connect the heating element 42 to a power source (not shown) to energize the heating element as desired. In the case where the transformation temperature is below the ambient temperature the heater will accelerate the transformation. Other heating means may be used in the cavity between the external support arrangement and the driver, e.g. chemical reaction heating devices, etc., or to provide an externally heated medium which is pumped through the coupling cavity.

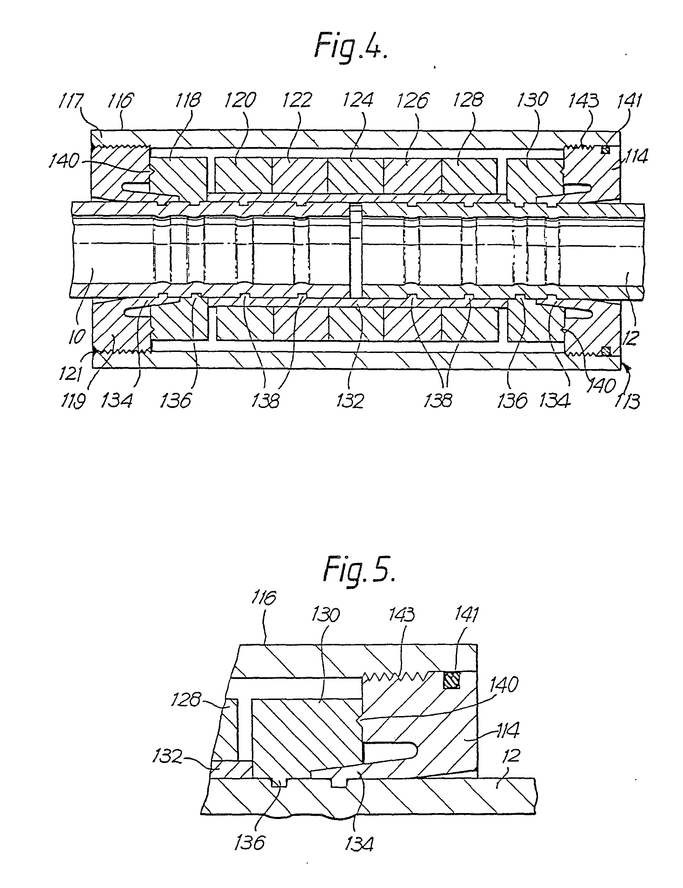

Figure 4 illustrates a cross-section of a further embodiment of composite pipe coupling for connecting pipes 10 and 12. In operation, the pipes 10 and 12 are positioned within the composite pipe coupling. The composite pipe coupling comprises an external support arrangement shown generally at 113, a pair of tensile rings 118 and 130, a liner 132, and a driver arrangement for said liner. Liner 132 is thin in cross-section and is preferably made from the same material as the pipes 10 and 12 in order to minimize process fluid corrosion. The driver arrangement for said liner preferably comprises drivers 120, 122, 124, 126 and 128, which are positioned concentrically around liner 132. These drivers are made from heat-recoverable metal. Driver 124 has less recovery than drivers 120, 122, 126 and 128 for the reason given above with reference to the driver 22.

The pair of tensile rings 118 and 130 are positioned concentrically around pipes 10 and 12. The rings 118 and 130 are positioned axially outside liner 132 and drivers 120, 122, 124, 126 and 128. Furthermore the rings 118 and 130 are positioned axially within and are in contact with external support structure members 119 and 114, respectively.

The tensile rings, like the drivers discussed above, are also made from heat-recoverable metal memory alloy.

As shown in Figure 4, drivers 120, 122, 124, 126 and 128 have been heated and they have constricted radially on the liner 132 and have caused the liner 132 to seal with respect to pipes 10 and 12. Likewise, the tensile rings 118 and 130 have been heated and they have also constricted radially on pipes 10 and 12 and their continuous ring-like teeth 136 cut into the pipes 10 and 12. As they constrict, they also drive the sealing lips 134 of the external support structures 114 and 116 radially to contact pipes 10 and 12 and cause the teeth on sealing lips 134 to seal with respect to pipes 10 and 12. It is important to note that external support structures 114 and 116 are likewise made from material similar to pipes 10 and 12 to minimize or eliminate the galvanic corrosion potential. The external support structure illustrated in Figure 4 is a canister 116 and a complementary lid 114. The canister 116 has a generally cylindrical sidewall and an end wall having an opening therethrough to accommodate one of the pipes to be coupled. It can be seen in Figure 4 that the canister 116 is made from a sleeve 117 and threaded end 119 which is welded at 121 to the sleeve 117. Likewise the lid 114 has an opening therethrough to accommodate the other pipe to be coupled. The lid 114 is attached to the canister by conventional means, as for example, by threading as can be seen in Figure 5. Other fastening means such as flanges and bolts, welding, adhesives, etc., may be employed. Furthermore, it will be appreciated that the configuration of the canister may be varied from cylindrical to cubical to spherical, etc., as may be desired. It is also possible to make the external support arrangement in the form of two shells which could be coupled together by flanges and bolts. It is important to note that the lid 114 and tensile ring 130 may be sealed with respect to each other by a metal to metal tooth seal 140 to keep out external contamination such as sea water. A similar seal utilizing a tooth seal 140 is made between tensile ring 118 and canister 116 as can be seen in Figure 4.

It can be seen in Figure 4 that the inside surface of the liner 132 is provided with teeth 138 which cut into the pipes 10 and 12 for the purpose of sealing and for carrying some tensile load. Most of the tensile load, however, is carried by the pair of tensile rings 118 and 130 and is transferred to the external support structures 116 and 114. The pair of tensile rings and complementary external support structures provide superior coupling tensile strength independent of the tensile strength capabilities of the liner and driver. Therefore, the main function of the liner 132 remains the maintenance of a good seal with pipes 10 and 12. By this arrangement, even at high tensile loads, the liner 132 remains unaffected and able to maintain a good pipe seal. It can be seen in Figure 4 that liner 132 axially abuts tensile rings 118 and 130 and therefore is capable of transmitting compression loads to tensile rings 118 and 130 and therefore to the external support structure. It is however also envisaged that the liner 132 may be spaced axially from the tensile rings, which together with the complementary external support structure provide by far the majority of the tensile strength of the composite pipe coupling.

During assembly of the coupling, it is preferred to tighten the external support structure lid 114 to set the tooth seal 140 and to hold tensile rings 118 and 130 and liner 132 in position. It is also preferred to seal threads 143 at assembly with a conventional seal such as a sealing tape, etc. An "O" ring 141 is shown sealing the threads. Later when the coupling is installed it is possible to fill the coupling cavity through an external port (not shown) with a filler. Such a port can also be used for pressure testing the installed coupling assembly.

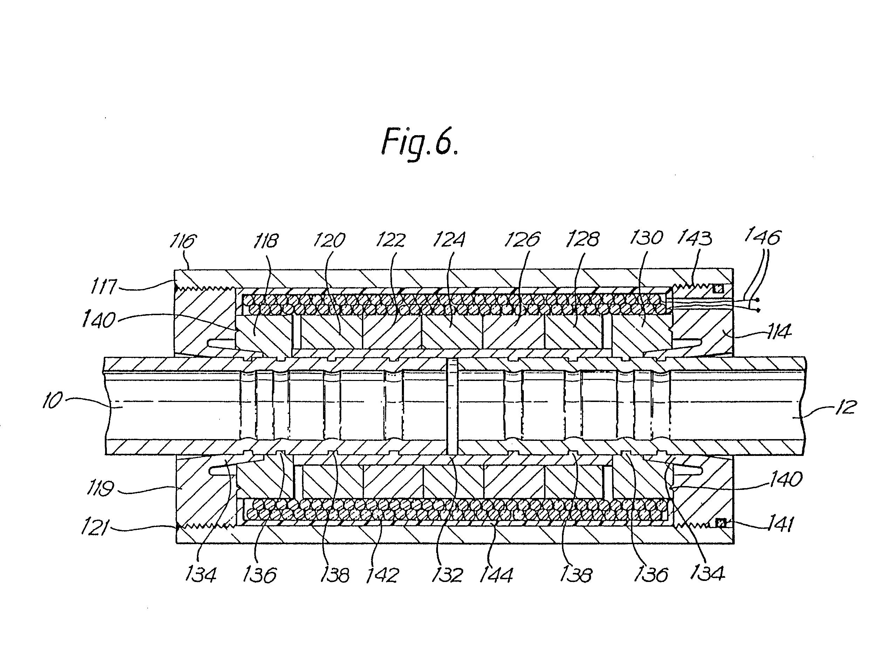

Figure 6 illustrates an alternative arrangement wherein the device shown in Figure 4 is supplemented by a controllable heating device similar to that described with reference to Figure 3. An electrical heating element 142 is placed in the cavity between the external support and the driver arrangement. Insulation 144 is placed between the heating element 142 and the external support to increase the efficiency of the heating element. Power leads 146 connect the heating element 142 to a power source (not shown) to energize the heating element as desired.

It will be appreciated that the present invention provides a composite pipe coupling capable of high tensile loading that is substantially independent of the tensile strength of the liner. Furthermore, the coupling may be installed rapidly, does not employ flanges, which are leak prone, and, since it requires no welding, is particularly advantageous in subsea applications.

**Claims**

1. A composite pipe-coupling comprising: liner means (16) capable of receiving therein the ends of pipes (10, 12) to be connected; driver means (18 to 26) of heat-recoverable metallic material mounted around said liner means, said driver means being arranged to constrict inwardly upon heat recovery to grip said liner means and to deform said liner means to effect sealing with the pipes to be connected; and support means (28) that is mounted around said driver means and said liner means to provide axial support for the liner means, by carrying tensile loading that is created in use by the connected pipes.

2. A composite pipe coupling as claimed in Claim 1, wherein said driver means comprises a plurality of ring-like segments distributed axially along and over said liner means.

3. A composite pipe coupling as claimed in Claim 1 or 2, wherein the driver means has a varying degree of heat recovery axially of the coupling, whereby the gripping forces of said driver means are variable.

4. A composite pipe coupling as claimed in any preceding claim, comprising heating means (42) disposed within said support means for effecting recovery of the driver means.

5. A composite pipe coupling as claimed in any preceding claim, wherein said support means comprises a closed, generally cylindrical canister (117) having an axial opening through the ends thereof, one end (114) of said canister being detachable from the remainder of the canister for assembly of the coupling.

6. A composite pipe coupling as claimed in any preceding claim, wherein said support means is mounted concentrically around said driver means and acts longitudinally inwardly of, preferably in direct contact with, the coupling on each end of said liner means.

7. A composite coupling as claimed in any of Claims 1 to 4, comprising two tensile rings (118, 130) of heat-coverable metallic material, said tensile rings being axially mounted adjacent respective ends of said liner means and being arranged to constrict inwardly upon heat recovery to grip respective ones of said pipes.

8. A composite pipe coupling as claimed in Claim 7, wherein said support means is mounted around said liner means, said driver means and said tensile rings to contain and support said tensile rings axially.

9. A composite pipe coupling as claimed in Claim 7 or 8, wherein said support means acts longitudinally of the coupling on, and preferably in direct contact with, respective ends of said tensile rings.

10. A composite pipe coupling as claimed in any of Claims 7 to 9, wherein said support means has a sealing lip (134) at each end thereof, said lips respectively extending axially inwardly toward said tensile rings and having a portion thereof extending under the tensile rings, said tensile rings being arranged to constrict radially upon recovery to grip said sealing lips and pipes to seal said support means to the pipes to be connected.

11. A method of coupling two pipes (10, 12) together, wherein liner means (16) is positioned over the ends of the pipes and heat-recoverable metallic driver means (18 to 26) is recovered inwardly to grip said liner means and to deform said liner means into sealing engagement with the pipes, and wherein a support arrangement (18) is mounted around said driver means and said liner means to provide axial support for the liner means, by carrying tensile loading that is created in use by the coupled pipes.

12. A method of coupling two pipes together as claimed in claim 11 wherein tensile rings of heat-recoverable metallic material are positioned within the support arrangement and adjacent to each end of the liner means, and wherein the tensile rings are heated to effect their inward recovery so that they grip the coupled pipes, and the tensile loading that is created in use by said coupled pipes is transmitted through the tensile rings to the support arrangement.

13. A method of coupling two pipes together employing a composite pipe coupling according to any of Claims 1 to 10.

**Patentansprüche**

1. Zusammengesetze Rohrkuppling mit: einem Einsatzteil (16) für die Aufnahme der Enden von miteinander zu verbindenden Rohren (10, 12); einem um den Einsatzteil herum angeordneten, aus wärmerückstellbarem metallischem Werkstoff bestehenden Treiberteil (18 bis 26), der dazu bestimmt ist, bei der Wärmerückstellung sich nach innen zusammenzuziehen und den Einsatzteil zu umspannen und zu verformen, um eine Abdichtung an den zu verbindenden Rohren herzustellen; und einer Abstützeinrichtung (28), die um den Treiberteil und den Einsatzteil herum angebracht ist, um eine axiale Abstützung für den Einsatzteil zu erzielen, indem sie Zugbelastungen aufnimmt, die von den verbundenen Rohren im Betrieb hervorgerufen werden.

2. Zusammengesetzte Rohrkupplung nach Anspruch 1, worin der Treiberteil eine Mehrzahl von ringrörmigen Abschnitten aufweist, die in axialer Richtung an dem Einsatzteil entlang und über diesen hinweg verteilt sind.

3. Zusammengesetzte Rohrkupplung nach Anspruch 1 oder 2, worin der Treiberteil in axialer Richtung der Kupplung einen unterschiedlichen Grad von Wärmerückstellbarkeit aufweist, wodurch die Klemmkräfte des Treiberteils unterschiedlich sind.

4. Zusammengesetzte Rohrkupplung nach einem der vorhergehenden Ansprüche, umfassend eine Heizeinrichtung (42) innerhalb der Abstützeinrichtung zum Herbeiführen der Rückstellung des Treiberteils.

5. Zusammengesetzte Rohrkupplung nach einem der vorhergehenden Ansprüche, worin die Abstützeinrichtung ein geschlossenes, insgesamt zylindrisches Gehäuse (117) umfaßt, in dessen Enden sich axial gerichtete Öffnungen befinden und dessen eines Ende (114) zum Zusammenbau der Kupplung von dem übrigen Gehäuse abnehmbar ist.

6. Zusammengesetzte Rohrkupplung nach einem der vorhergehenden Ansprüche, worin die Abstützanordnung konzentrisch um den Treiberteil angebracht ist und in Längsrichtung nach innen, vorzugsweise durch unmittelbare Berührung mit der Kupplung an jedem Ende des Einsatzteils Wirkung ausübt.

7. Zusammengesetzte Rohrkupplung nach einem der Ansprüche 1 bis 4, umfassend zwei Zugringe (118, 130) aus wärmerückstellbarem metallischem Werkstoff, wobei die Zugringe axial an zugeordneten Enden des Einsatzteils angebracht und so eingerichtet sind, daß sie sich bei Wärmerückstellung nach innen zusammenziehen, um die jeweils zugeordneten Rohre zu umklammern.

8. Zusammengesetzte Rohrkupplung nach Anspruch 7, worin die Abstützeinrichtung um den Einsatzteil, den Treiberteil und die Zugringe herum angebracht ist, so daß sie die Zugringe einschließt und axial abstützt.

9. Zusammengesetzte Rohrkupplung nach Anspruch 7 oder 8, worin die Abstützeinrichtung in Längsrichtung der Kupplung auf die jeweiligen Enden der Zugringe wirkt und sie vorzugsweise unmittelbar berührt.

10. Zusammengesetzte Rohrkupplung nach einem der Ansprüche 7 bis 9, worin die Abstützeinrichtung an ihren beiden Enden jeweils eine Dichtungslippe (134) aufweist, worin die Lippen sich jeweils axial einwärts zu den Zugringen erstrecken und ein Abschnitt der Dichtungslippe unter die Zugringe reicht, und worin die Zugringe so angeordnet sind, daß sie bei Wärmerückstellung sich radial zusammenziehen und die Dichtungslippen und Rohre zusammenklemmen, um die Abstützeinrichtung dicht gegen die zu verbindenden Rohre zu legen.

11. Verfahren zum Kuppeln zweier Rohre (10, 12), worin ein Einsatzteil (16) über die Enden der Rohre gelegt ist und ein wärmerückstellbarer Treiberteil (18 bis 26) nach innen rückgestellt wird, um den Einsatzteil einzuklemmen und ihn dichtend gegen die Rohre zu legen, und worin eine Abstützeinrichtung (28) um den Treiberteil und den Einsatzteil herum angebracht ist, um eine axiale Abstützung für den Einsatzteil zu bieten, indem die Zugbelastung aufgenommen wird, die beim Gebrauch von den gekuppelten Rohren hervorgebracht wird.

12. Verfahren zum Kuppeln von zwei Rohren, nach Anspruch 11, worin Zugringe aus wärmerückstellbarem metallischem Werkstoff innerhalb der Abstützeinrichtung und neben jedem Ende des Einsatzteils angeordnet sind und worin die Zugringe erhitzt werden, um ihre einwärts gerichtete Rückstellung herbeizuführen, so daß sie die gekuppelten Rohre einklemmen, und worin die von den gekuppelten Rohren im Gebrauch hervorgebrachten Zugbeanspruchungen durch die Zugringe auf die Abstützeinrichtung übertragen werden.

13. Verfahren zum Kuppeln von zwei Rohren unter Anwendung einer zusammengesetzten Rohrkupplung nach einem der Ansprüche 1 bis 10.

**Revendications**

1. Un raccord de tuyauterie composite comprenant: des moyens de chemisage (16) capables de recevoir intérieurement les extrémités de tuyaux (10, 12) à raccorder; des moyens d'actionnement (18 à 26) en une matière métallique à reprise thermique montés autour desdits moyens de chemisage, lesdits moyens d'actionnement étant agencés de façon à se contracter vers l'intérieur lors de la reprise thermique pour serrer lesdits moyens de chemisage et pour déformer lesdits moyens de chemisage afin d'assurer l'étanchéité avec les tuyaux à raccorder; et des moyens supports (28) qui sont montés autour desdits moyens d'actionnement et desdits moyens de chemisage pour fournir un soutien axial auxdits moyens de chemisage en supportant la charge axiale qui est créée, en service, par les tuyaux raccordés.

2. Un raccord de tuyauterie composite tel que revendiqué dans la revendication 1, dans lequel les moyens d'actionnement comportent une série de segments du type anneau répartis axialement le long et au-dessus des moyens de chemisage.

3. Un raccord de tuyauterie composite tel que revendiqué dans la revendication 1 ou 2, dans lequel les moyens d'actionnement ont des degrés de reprise thermique variables dans la direction axiale du raccord de sorte que les forces de serrage exercées par lesdits moyens d'actionnement sont également variables.

4. Un raccord de tuyauterie composite tel que revendiqué dans une quelconque revendication précédente, comprenant des moyens chauffants (42) disposés à l'intérieur desdits moyens supports pour provoquer la reprise des moyens d'actionnement.

5. Un raccord de tuyauterie composite tel que revendiqué dans une quelconque revendication précédente, dans lequel lesdits moyens supports comprennent une boîte fermée (117) de forme générale cylindrique ayant une ouverture axiale à travers ses extrémités, une extrémité (114) de ladite boîte étant séparable du reste de la boîte pour permettre l'assemblage du raccord.

6. Un raccord de tuyauterie composite tel que revendiqué dans une quelconque revendication précédente, dans lequel lesdits moyens supports sont montés concentriquement autour desdits moyens d'actionnement et agissent longitudinalement vers l'intérieur du raccord sur chaque extrémité des moyens de chemisage avec lesquels ils sont de préférence directement en contact.

7. Un raccord de tuyauterie composite tel que revendiqué dans une quelconque des revendications 1 à 4 comprenant deux bagues de traction (118, 130) en une matière métallique à reprise thermique lesdites bagues de traction étant montées axialement adjacentes aux extrémités respectives desdits moyens de chemisage et étant agencées de façon à se contracter vers l'intérieur lors de la reprise thermique pour serrer chacune un tuyau respectif.

8. Un raccord de tuyauterie composite tel que revendiqué dans la revendication 7, dans lequel lesdits moyens supports sont montés autour desdits moyens de chemisage, desdits moyens d'actionnement et desdites bagues de traction pour contenir et soutenir lesdites bagues de traction axialement.

9. Un raccord de tuyauterie composite tel que revendiqué dans la revendication 7 ou 8, dans lequel lesdits moyens supports agissent dans la direction longitudinale du raccord sur les extrémités respectives desdites bagues de traction avec lesquelles ils sont, de préférence, directement en contact.

10. Un raccord de tuyauterie composite tel que revendiqué dans une quelconque des revendications 7 à 9, dans lequel lesdits moyens supports comportent une lèvre d'étanchéité (134) à chacune de leurs extrémités, lesdites lèvres s'étendant respectivement axialement vers l'intérieur en direction desdites bagues de traction et ayant une partie qui s'étend au-dessous des bagues de traction, lesdits bagues de traction étant agencées de manière à se contracter radialement lors de la reprise pour serrer lesdites lèvres d'étanchéité et les tuyaux afin de fixer de manière étanche lesdits moyens supports aux tuyaux qui doivent être raccordés.

11. Un procédé pour raccorder entre eux deux tuyaux (10, 12) suivant lequel on positionne des moyens de chemisage (16) sur les extrémités des tuyaux et on provoque la reprise vers l'intérieur de moyens d'actionnement métalliques (18 à 26) à reprise thermique pour serrer lesdits moyens de chemisage et pour déformer lesdits moyens de chemisage en appui étanche contre les tuyaux, et suivant lequel on monte un dispositif support (28) autour desdits moyens d'actionnement et desdits moyens de chemisage pour fournir un soutien axial auxdits moyens de chemisage en supportant la charge de traction qui est créée, en service, par les tuyaux raccordés.

12. Un procédé pour raccorder entre eux deux tuyaux, tel que revendiqué dans la revendication 11, suivant lequel on positionne des bagues de traction métalliques à reprise thermique à l'intérieur du dispositif support et adjacentes à chaque extrémité des moyens de chemisage et suivant lequel on chauffe les bagues de traction pour provoquer leur reprise vers l'intérieur de sorte qu'elles serrent les tuyaux raccordés et que la charge de traction qui est créée, en service, par lesdits tuyaux raccordés est transmise, par l'intermédiaire des bagues de traction, au dispositif support.

13. Un procédé pour raccorder entre eux deux tuyaux utilisant un raccord de tuyauterie composite selon l'une quelconque des revendications 1 à 10.

Fig.1.
18
20
22
24
26
16
34
10
12
14
28
30
36
36
32

Fig.2.
18
20
22
24
26
16
34
12
10
37
38
40
36
36

Fig.3.

18
20
22
24
26
46
16
34
10
12
44
42
36
36
30
32

Fig.4.

117
116
118
120
122
124
126
128
130
143
141
140
114
10
12
121
119
134
136
138
132
138
136
134
140
113

Fig.5.

116
130
143
141
128
140
114
132
12
136
134

Fig.6.
12
146
114
140
141
143
134
130
136
128
138
126
144
124
132
122
142
120
138
118
136
116
134
117
140
10
119
121